(19) Europäisches Patentamt European Patent Office Office européen des brevets

(11) **EP 2 520 909 A1**

(12) **EUROPEAN PATENT APPLICATION**

(43) Date of publication:
**07.11.2012 Bulletin 2012/45**

(51) Int Cl.:
***G01F 23/292*** (2006.01)  ***G01F 23/296*** (2006.01)

(21) Application number: **12164667.3**

(22) Date of filing: **18.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.05.2011 US 201113099038**

(71) Applicant: **Honeywell-Enraf B.V.**
**2628 XJ Delft (NL)**

(72) Inventors:
• **Gellaboina, Mahesh Kumar**
**Morristown, NJ 07962-2245 (US)**

• **Boregowda, Lokesh Rayasandra**
**Morristown, NJ 07962-2245 (US)**
• **Mohideen, Mohammed Ibrahim**
**Morristown, NJ 07962-2245 (US)**
• **Ramegowda, Dinesh**
**Morristown, NJ 07962-2245 (US)**
• **Zuid, Bin Sai**
**Morristown, NJ 07962-2245 (US)**

(74) Representative: **Houghton, Mark Phillip**
**Patent Outsourcing Limited**
**1 King Street**
**Bakewell, Derbyshire DE45 1DZ (GB)**

(54) **Storage tank inspection system and method**

(57) A multi-sensor method and system (100) for imaging and inspecting a storage tank (102) that holds a liquid. The system includes an infrared sensor (104) including a scanning vertical mount (106) positioned outside the storage tank, an ultrasonic sensor array (110) positioned outside the storage tank, and at least one of an ultrasonic sensor (108) positioned inside the storage tank and a phased array radar (112) positioned inside the storage tank secured to an interior top surface of the storage tank. The system further includes a processor (114) coupled to receive multi-sensor data from the infrared sensor, ultrasonic sensor array and at least one of the ultrasonic sensor in the tank and the phased array radar. The processor fuses the multi-sensor data to generate a sludge level (120) image profile for sludge in the storage tank, a liquid level image for liquid in the storage tank, and optionally an integrity profile for a shell of the storage tank.

FIG. 1A

EP 2 520 909 A1

FIG. 1B

**Description**

FIELD

Disclosed embodiments relate to the field of inspection of storage tanks that hold liquids, and more particularly to the automatic inspection of such storage tanks.

BACKGROUND

It is standard practice to use large metal storage tanks for storing a variety of liquids, such as beverage and petroleum products. Conventional large storage tanks are usually made from non-stainless steel plates, and in the case of petroleum products the storage tanks are generally made from 1/4 inch (0.63 cm) to 1/2 inch (1.27 cm) thick steel plates welded together. The dimensions of conventional large storage tanks usually range in the hundreds of feet (100 feet = 30.5 meters) in height and hundreds of feet in diameter. Tanks of this type require regular inspection and cleaning. Inspection of a large storage tank may include determining the sediments or contamination levels within the tank and evaluating the structural integrity of the structure (e.g., the tank shell).

Currently, the inspection and cleaning processes are performed manually, which poses certain disadvantages. First, manual inspection of conventional large storage tanks is prone to human error. Second, manual inspection of such expansive units can be cumbersome for the human inspector. Third, the involvement of an individual in such a process can pose serious health hazards to the personnel involved. In addition, the inspection process usually requires the shutdown of the storage tank from production, which can lead to revenue losses.

Another problem associated with the manual inspection of conventional large storage tanks involves the presence of multiple layers formed within the tank due to various compositions. In a petroleum product application, for example, multiple layers, such as crude, paraffin, water and sediment (technically collectively referred to as "sludge"), may form within the storage tank. Sludge, due to its higher density compared to the petroleum product stored, may form at the bottom of the tank, or stick to the sides of the tank, due to prolonged storage. The sludge layer may be anywhere from several millimeters to one meter or more thick.

One of the goals of a proper inspection is to estimate the sludge level in a storage tank, as well as other layer levels, as accurately as possible, in order to proceed with cleaning if required. It can be difficult for human inspectors, however, to measure the sludge level underneath other layers of liquid, nor is it easy for them to manually measure tens of sampling points on top of the tank. Another concern is integrity of the shell of the tanks, which can degrade due to aging, earthquakes, or bad weather impacts, etc., which generally requires accurate inspection with a traditional visual method applied to an emptied storage tank.

Therefore, there is a need to improve upon the inspection of storage tanks that store liquids, and, more specifically, a need for an automated system and method for inspecting large storage tanks that can accurately determine liquid levels within, as well as the sludge level.

SUMMARY

Disclosed embodiments include a multi-sensor method for inspecting storage tanks that hold a liquid. Although each sensor has its own particular limitations when working in isolation, as disclosed herein, data from multiple sensors is combined in a way that complement each other to provide a reliable and accurate solution for the inspection of storage tanks that hold liquids.

The method includes generating an infrared (IR) image and an ultrasonic image of the exterior of the storage tank, and generating at least one of an ultrasonic (ultrasound) image and a radar image of the interior of the storage tank. The method further includes fusing the respective images, to generate a sludge level in the storage tank, a liquid level in the storage tank, and optionally an integrity profile of a shell of the storage tank.

Another disclosed embodiment comprises a multi-sensor imaging system for a storage tank that holds a liquid. The imaging system comprises an IR sensor including a scanning vertical mount positioned outside the storage tank, an ultrasonic sensor positioned outside the storage tank, and at least one of an ultrasonic sensor positioned inside the storage tank and a phased array radar positioned inside the storage tank secured to the interior top surface of the storage tank. The imaging system further includes a processor coupled to receive multi-sensor data from the respective sensors. The processor fuses (i.e. combines) the multi-sensor data to generate a sludge level in the storage tank, a liquid level in the storage tank, and optionally an integrity profile for a shell of the storage tank.

BRIEF DESCRIPTION OF THE DRAWINGS

FIG. 1A is an example illustration of a multi-sensor tank imaging system shown in conjunction with a large storage tank, according to an example embodiment.

FIG. 1B is an example illustration of another multi-sensor tank imaging system shown in conjunction with a large storage tank, according to an example embodiment.

FIG. 2 is an example illustration of a phased-array radar system shown in conjunction with a large storage tank, according to an example embodiment.

FIG. 3 is an example illustration of an IR camera system shown in conjunction with a large storage tank, according to an example embodiment.

FIG. 4 is an example illustration of an IR camera system shown in conjunction with a large storage tank, according to an example embodiment.

FIG. 5 is an example illustration of an IR camera system shown in conjunction with a large storage tank, according to an example embodiment.

FIG. 6 is an example illustration of an IR camera system shown in conjunction with a large storage tank, according to an example embodiment.

FIG. 7 is an example illustration of an IR camera system shown in conjunction with a large storage tank, according to an example embodiment.

DETAILED DESCRIPTION

Disclosed embodiments are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed embodiments. One having ordinary skill in the relevant art, however, will readily recognize that the subject matter disclosed herein can be practiced without one or more of the specific details or with other methods. In other instances, well-known structures or operations are not shown in detail to avoid obscuring certain aspects. This Disclosure is not limited by the illustrated ordering of acts or events, as some acts may occur in different orders and/or concurrently with other acts or events. Furthermore, not all illustrated acts or events are required to implement a methodology in accordance with the embodiments disclosed herein.

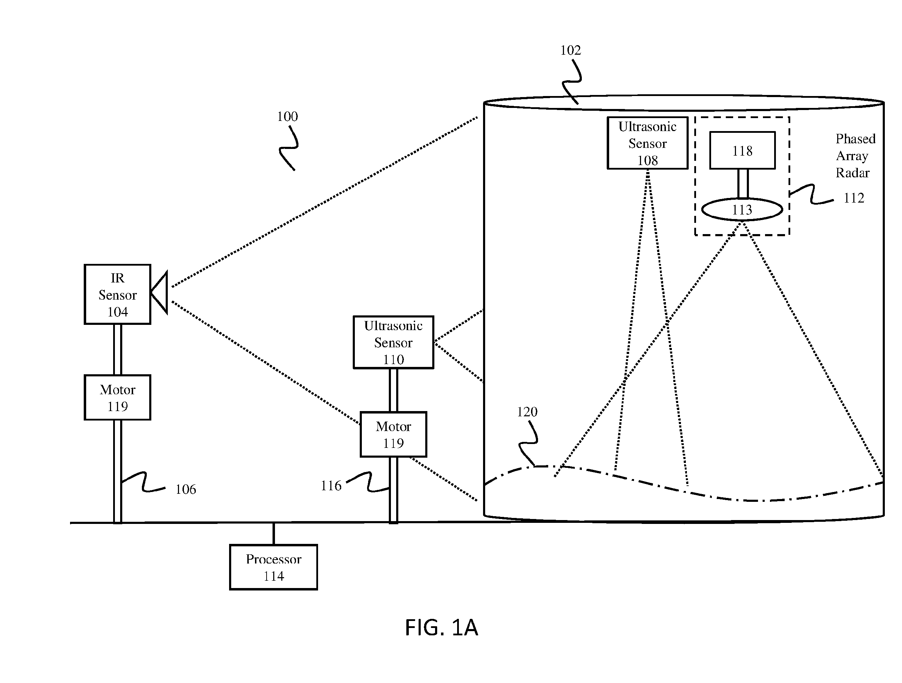

Disclosed embodiments include a multi-sensor method and system for inspecting a storage tank that includes a liquid. FIG. 1A is an example illustration of a multi-sensor imaging system 100 shown in conjunction with a large storage tank 102, according to an example embodiment. The imaging system 100 includes an IR sensor (also referred to as IR camera) 104 including a scanning vertical mount 106 positioned outside the storage tank 102, an ultrasonic sensor 110 (generally an ultrasonic sensor array, and referred to herein as ultrasonic sensor array 110) positioned outside the storage tank on a scanning vertical mount 116, an ultrasonic sensor 108 positioned inside the storage tank and optionally secured to an interior top surface of the storage tank 102, and a phased array radar system 112 positioned inside the storage tank 102 secured to the interior top surface of the storage tank. The scanning vertical mounts 106 and 116 each include a motor 119 for moving their respective sensors in the vertical direction. A controller (not shown) is generally provided for controlling the motor 119 to control the vertical position of the IR sensor 104 and ultrasonic sensor array 110.

The phased array radar system 112 includes an antenna array 113, where the radiating elements of the antenna array 113 are connected to electronics and processing unit comprising high-resolution RF transmitter-receiver modules 118. The wide field of view (FOV) shown provided by phased array radar system 112 in FIG. 1A is generally implemented by a narrow beam from antenna array 113 that is electronically beam scanned by electronics in the electronics and processing unit comprising high-resolution RF transmitter-receiver modules 118. The imaging system 100 further includes a processor 114 coupled to receive multi-sensor data from sensors including the IR sensor 104, the ultrasonic sensor 108, ultrasonic sensor array 110, and phased array radar 112. The method can include fusing together an IR image from the IR sensor 104, ultrasonic images from the ultrasonic sensors 108 and 110, and a radar image from the phased array radar 112 to generate a sludge level 120 in the storage tank 102, a liquid level in the storage tank, and optionally an integrity profile of the shell of the storage tank 102.

Data fusion of the data from the respective sensors (e.g., infrared, ultrasonics, and phased array radar) can be realized by converting the respective sensor measurements into a common coordinate system, since each of the sensors is placed at a different location, and therefore the reference axis varies among each sensor. Measurements taken from individual sensors can be mapped to a common reference system. Positioning data, such from as global positioning system (GPS) associated with the sensors helps to map the measurements from each of them onto one common coordinate system.

Alternatively, cross-sensor calibration, which refers to calibration between heterogeneous (i.e., different) sensors, can be used to convert the measurements from the different sensors into the common coordinate system. In the embodiment, including both an IR sensor 104 and an ultrasound sensor array 110 on the outside of the tank 102 mounted on the same vertical mount can ease the data fusion processing.

Once the measurements from the different sensors are transformed into a common coordinate system, non-uniform interpolation (or non-linear interpolation since the profiling is dealing with rough surface fluctuation) can be performed to populate the missing measurements from the various sensors to produce a continuous 3D sludge profile. Since the measurements from the different sensors are distributed randomly inside the tank, to obtain a continuous 3D (complete 360°) profile, the missing measurement points needs to be filled. The operation to fill missing measurements from available measurements is referred to as non-uniform interpolation (or non-linear interpolation since the profiling is dealing with rough surface fluctuation) to populate the missing measurements inside the tank. There are many known approaches available in the literature including, but not limited to, cubic spline, volume spline, polynomial. This data fusion process can provide a complete 360° sludge profile 120 inside the tank 102. Further, in one embodiment, the sludge profile 120 may be visualized with an interactive visualization tool provided on a computer, through which a tank operator can view the complete sludge profile by panning and zooming the tank image displayed on a suitable display device.

The phased array radar 112 for multi-sensor imaging system 100 can comprise a high-resolution phased-array imaging radar for imaging the liquid (e.g., oil) surface and sludge surface 120 within the storage tank 102. Conventional high-resolution imaging radars are known as radio detection and ranging instruments that are used in level measurements in tanks. Existing radar based gauging solutions are limited to measure a single liquid level, which is a single point measurement. The disclosed use of phased array radar facilitates measuring non-uniform profiles of sludge, which requires multi-point measurements. Depending on product type and level within the tank, the phase and power of the radar signal can be varied to accommodate different dielectric media.

Moreover, conventional radar level gauges cannot be used for imaging inside a large storage tank because they are developed for distance measurements, because they have large beam widths covering a wide footprint on the surface of liquid inside the tank, and because their antennas must be sealed to the nozzle on the storage tank to prevent leakage (e.g., petrochemical gas leakage) from exiting the tank. Further, moving parts on the antenna and radar body inhibit its use in storage tanks. Therefore, imaging the contents of a tank with conventional radar gauging technology is not generally possible.

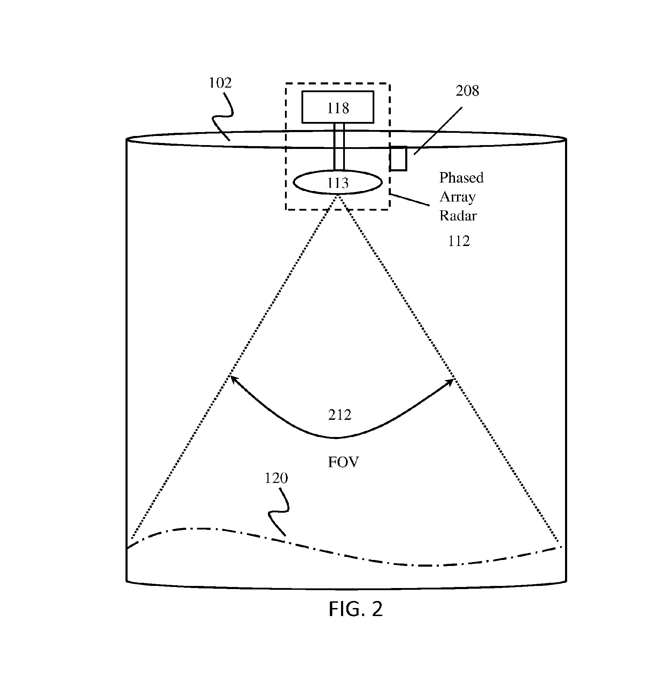

Disclosed embodiments overcome the above-described problems by including a phased array radar 112 that can be a miniaturized high-resolution phased-array radar, which has a narrow beam-width, a smaller footprint, broad bandwidth, and electronically-controlled beam scanning over the surface of the liquid and/or sludge on the tank bottom. FIG. 2 shows one example embodiment showing phased-array radar system 112 embodied as electronics and processing unit comprising high-resolution RF transmitter-receiver modules 118 connected to digitally controlled phased antenna array 113 comprising a plurality of antenna elements both located within the storage tank 102. Phased-array radar 112 has the ability to avoid obstacles in the tank 102, and can penetrate through the layers (e.g., oil layers) of liquid in the tank 102 to image the tank bottom with resolution in both planes to provide 3 dimensional (3D) data. The method can provide not only imaging results of the sludge profile 120 in 3D, but also provide more information about the surface of the liquid in 3D, and can be especially useful to monitor non-planar surfaces, and/or a non-horizontal roof or top of the tank 102.

The phased-array radar 112 is mounted at a fixed mechanical structure 208 inside the tank, shown at the top of the tank 102. The electronics and processing unit comprising high-resolution RF transmitter-receiver modules 118 associated with the phased array radar 112 are generally located outside the tank 102 as shown in FIG. 2. The beam scanning of the antenna array 113 is generally controlled electronically to cover different areas of the surface of the tank 102 product with a small footprint. Transmission of the data processed by the phased-array radar 112 to the processor 114 (e.g., a central processing unit) shown in FIG. 1A can be through a wireless mode or wired mode.

The beamforming of the phased-array radar 112 can be performed either by software, hardware or any combination of the two. Since the antenna array 113 is sealed and generally fixed to the tank nozzle, the radar beam is electronically steered with an angle 212 to cover the area of the tank content. The phased-array radar 112 cannot only provide the surface profile of the tank bottom, and sludge, but it can also provide accurate intermediate liquid-level data, which are currently measured by level gauges. Since movement of the liquid(s) within the tank 102 tends to be much more frequent than the change of the sludge and/or bottom, the phased-array radar 112 can be used as a level gauging radar when liquid movement takes place, in addition to being used as an imaging radar to detect the sludge and any defects in the bottom of the tank 102.

Multi-sensor imaging system 100 shown in FIG. 1A comprises an ultrasonic sensor array 110 that is positioned along the exterior of the tank 102, and an ultrasonic sensor 108 that is positioned within the interior of the tank 102. Ultrasonic sensor 108 can be an ultrasonic sensor or ultrasonic sensor array. The ultrasonic sensor 108 within the tank can be secured to an interior top surface or the bottom of the storage tank 102. An ultrasonic sensor array 110 installed outside the tank 102 can be used to detect the cracks of the tank shell using acoustic emission principles. Ultrasonic sensors 108 located at the top of the tank 102 are particularly useful for situations such as when the level of the liquid remains high and the phased array radar 112 cannot penetrate through the liquid to reach the sludge layer 120.

Ultrasound technology can be used for calculating the sludge level 120 in a tank 102. The acoustic frequency waves transmitted by the ultrasonic sensor into a tank farm provides different responses for different liquid levels, since sound waves travel at different velocities in different mediums and the reflected signal varies for sludge and other liquids. Ultrasonic waves can further penetrate through metallic material such as the tank wall and tank bottom. Consequently, ultrasound technology can also detect defects/cracks of the tank shell, which aids in preventing potentially large losses caused by leakages. Ultrasound technology further includes 3D ultrasonic sensing that formats sound wave data into 3D images. Moreover, four-dimensional (4D) ultrasound is 3D ultrasound in motion.

Obtaining a sludge profile on one side of a liquid storage tank is generally not helpful, due to the large circumference of the tank. Thus, obtaining the sludge profile on all sides of the tank is generally desirable. This can be provided by placing more than one sensor around exterior of the tank 102 such that the sensors cover the complete circumference of the tank. Once data from all sensors is obtained, the data can be used to generate a 2D profile. To obtain a 3D profile, either 3D data can be used by adding data for a third dimension as described below, or be synthetically generated to provide a quasi-3D profile by non-linear interpolation as described above. In the case of real 3D data, the top profile of the sludge within the tank 102 can be obtained, such as by an array of sensors placed on the tank that transmit narrow-beam signals, and the reflected signals are captured and used to calculate the height distribution of the top profile of the sludge so that a 3D volumetric profile may be generated.

As disclosed above, multi-sensor imaging system 100 also comprises IR sensor(s) or "thermal" cameras. There are several example single-view and multi-view camera configuration options for tank farm monitoring applications disclosed herein. The benefits and limitations of these configurations are also described with respect to complexity, pixel resolution and measurement accuracy.

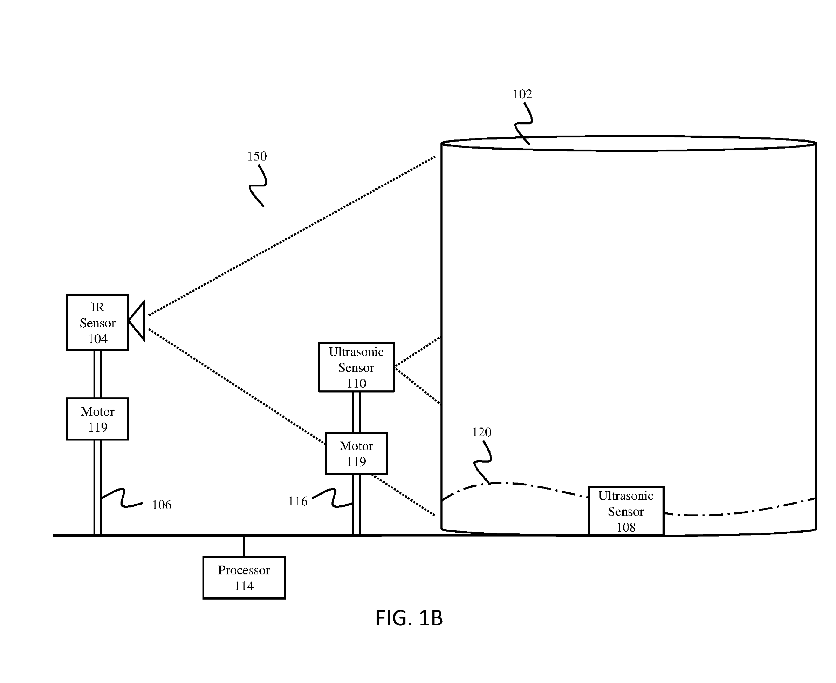

FIG. 1B is an example illustration of another multi-sensor tank imaging system 150 shown in conjunction with a large storage tank, according to an example embodiment. The only sensor in the tank 102 is an ultrasonic sensor 108 that is shown at the bottom of the tank 102, which is thus submerged in the liquid. The ultrasonic sensor 108 can be accurately operated in the liquid in the tank 102 with suitable calibration, analogous to submarine sonar in water.

Embodiments of the invention include many different other sensor combinations. In another example arrangement, the imaging system includes an array of ultrasonic sensors on the bottom of the tank that are connected to a single ultrasound sensor or array of ultrasound sensors on the top of the tank. This arrangement provides direct transmission measurements, in comparison with more conventional back reflection sensor measurements.

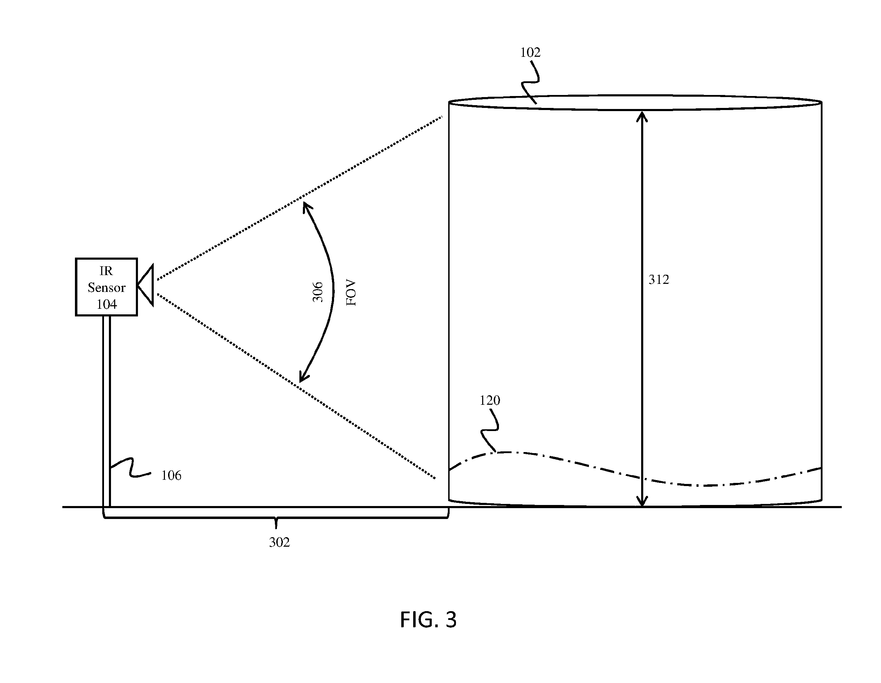

FIG. 3 provides an example description of an IR sensor/camera configuration. Sludge level measurement for larger tanks can be obtained using an IR camera 104 that has high pixel accuracy along the vertical axis. For example, consider that a tank 102 of dimension 30 m tall and 40 m diameter that is monitored using an IR video camera 104 having a 24° vertical field of view (FOV) 306 and having resolution of 640x480 pixels. In the case of an oil storage tank 102, with no prior knowledge of crude oil quality or quantity, as per the following expression, the IR camera 104 can be placed 115m from the tank 102 to image the entire tank. The range R (i.e., the distance 302 from the tank 102 at which the IR camera 104 is placed) is expressed using the following equation:

$$Range\,(R) = \frac{X}{\theta}$$

Where X is the height 312 of the tank 102 in meters and θ is the FOV in radians.

For the above considered tank dimensions, the pixel resolution is 6.25 cm in vertical direction and 1 cm in horizontal direction. If the image-based measurement of the sludge level 120 deviates from actual level by 1 pixel in the vertical direction, it translates to a variation of 7,960 liters of liquid for the tank dimension under consideration.

For a tank 102 of 40 meters in diameter and the IR camera 104 having a 24° FOV and resolution of 640x480, the achievable pixel resolution (and hence measurement accuracy) in terms of distance between camera and tank is summarized in Table 1 provided below.

Table 1. Relation between IR Camera-Tank Range and Measurement Accuracy

| Camera-tank range (m) | Tank height covered in FOV (m) | Pixel resolution - vertical (cm) | One pixel vertical separation equivalent to... (in liters) |
|---|---|---|---|
| 10 | 2.51 | 0.52 | 647.03 |
| 20 | 5.03 | 1.05 | 1294.06 |
| 30 | 7.54 | 1.57 | 1941.09 |

(continued)

| Camera-tank range (m) | Tank height covered in FOV (m) | Pixel resolution - vertical (cm) | One pixel vertical separation equivalent to... (in liters) |
|---|---|---|---|
| 40 | 10.05 | 2.09 | 2588.12 |
| 50 | 12.57 | 2.62 | 3235.16 |
| 60 | 15.08 | 3.14 | 3882.19 |
| 70 | 17.59 | 3.67 | 4529.22 |
| 80 | 20.11 | 4.19 | 5176.25 |
| 90 | 22.62 | 4.71 | 5823.28 |
| 100 | 25.13 | 5.24 | 6470.31 |
| 110 | 27.65 | 5.76 | 7117.34 |
| 120 | 30.16 | 6.28 | 7764.37 |
| 130 | 32.67 | 6.81 | 8411.41 |
| 140 | 35.19 | 7.33 | 9058.44 |
| 150 | 37.7 | 7.85 | 9705.47 |
| 160 | 40.21 | 8.38 | 10352.5 |
| 170 | 42.73 | 8.9 | 10999.53 |
| 180 | 45.24 | 9.42 | 11646.56 |
| 190 | 47.75 | 9.95 | 12293.59 |

As evident from the above table, it is desirable to place the IR camera 104 as close as possible to the tank 102 for better pixel resolution and hence measurement accuracy.

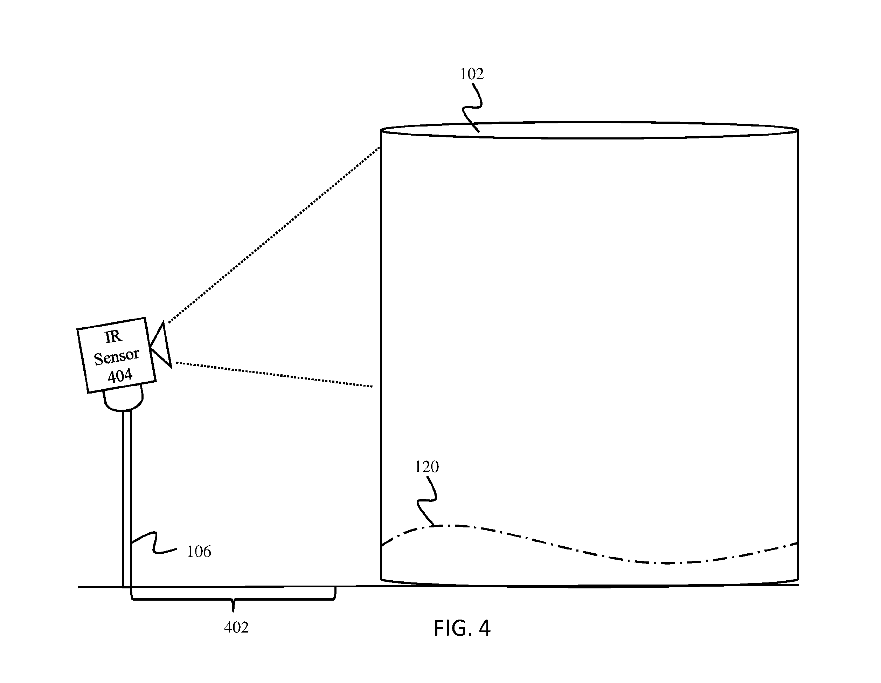

FIG. 4 provides a description of an alternative example IR camera configuration. In this configuration the IR camera comprises a pan tilt zoom (PTZ) IR camera 404 on a vertical pole 106 that can be a relatively close distance 402 from the tank 102. The IR camera 404 captures images of the tank 102 at multiple tilt angles to cover the tank 102 from top to bottom. The number and nature of the images captured during this process varies depending on the height of the tank 102 and the extent of the IR camera's 404 vertical FOV. The captured video dataset can be individually analyzed to determine the appropriate video sequence, which indicates the sludge level 120. As described above, depending on the ground distance 402 between the vertical pole 106 and the tank 102, the accuracy of the sludge level calculation can vary. This calculation is referred to herein as a coarse sludge level estimate. The coarse sludge estimate can be analyzed further with images taken at a higher zoom level by the IR camera 404, resulting in refinement of the coarse estimate. If the sludge level 120 in the tank 102 in a location captured by an oblique view by the IR camera 404, then the final sludge level estimate tends to suffer poor pixel resolution and hence measurement accuracy problems. Table 2 below illustrates the effect of oblique views on measurement accuracy when the IR camera 404 is tilted from -16° to +14°.

Table 2. Relation between Obliqueness and Measurement Error

| Tilt angle ($\theta$) | Actual Height (m) | Estimated Height (m) | Error (cm) |
|---|---|---|---|
| -16.668 | 0.75 | 0.650746 | 9.92545 |
| -8.33 | 0.75 | 0.700878 | 4.912174 |
| -4.17 | 0.75 | 0.722694 | 2.730591 |
| -0.00139 | 0.75 | 0.752985 | 0.298541 |
| 4.17 | 0.75 | 0.774143 | 2.414315 |
| 8.33 | 0.75 | 0.808503 | 5.8503 |

(continued)

| Tilt angle ($\theta$) | Actual Height (m) | Estimated Height (m) | Error (cm) |
|---|---|---|---|
| 13.89 | 0.75 | 0.859054 | 10.90539 |

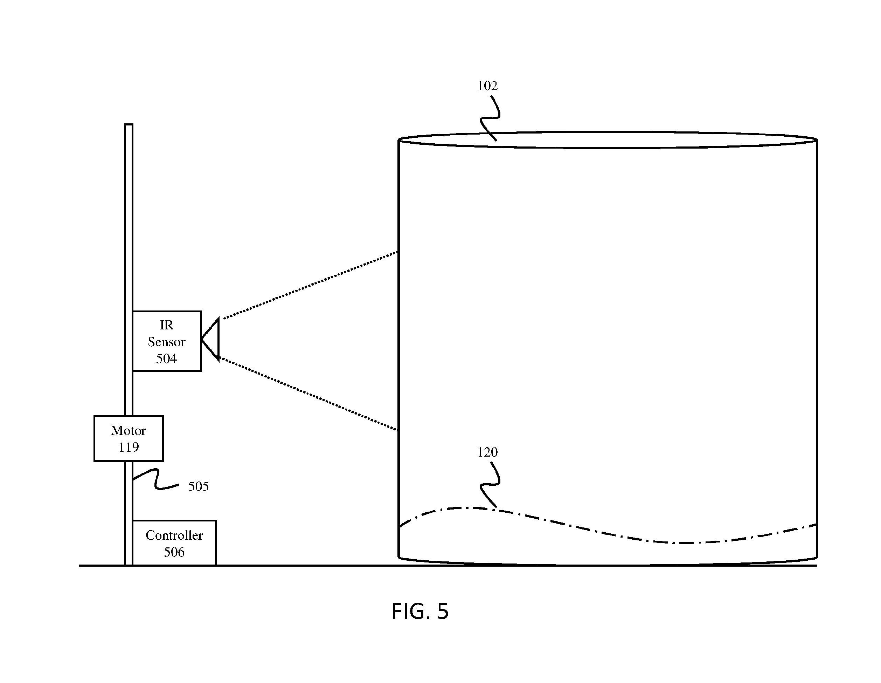

FIG. 5 provides a description of yet another alternative example IR camera configuration. In this configuration the IR camera comprises forward-looking IR camera 504 with its vertical position off-ground adjusted using a vertical railing arrangement 505 that is controlled by a controller 506 that controls the vertical position of the forward-looking IR camera 504. The position of the IR camera 504 in FIG. 5 can be varied from top to bottom of the vertical railing arrangement 505 to cover the entire tank 102. At every camera position, corresponding video data can be recorded. Unlike the previous configuration such as shown in FIG. 4, this arrangement does not generate video with oblique views. The captured video dataset can be individually analyzed to determine the appropriate video sequence, which indicates the sludge level 120. If the IR camera 504 is enabled with PTZ capability, then the pixel resolution of the image-based sludge detection and the estimate of the sludge estimate 120 can be further improved.

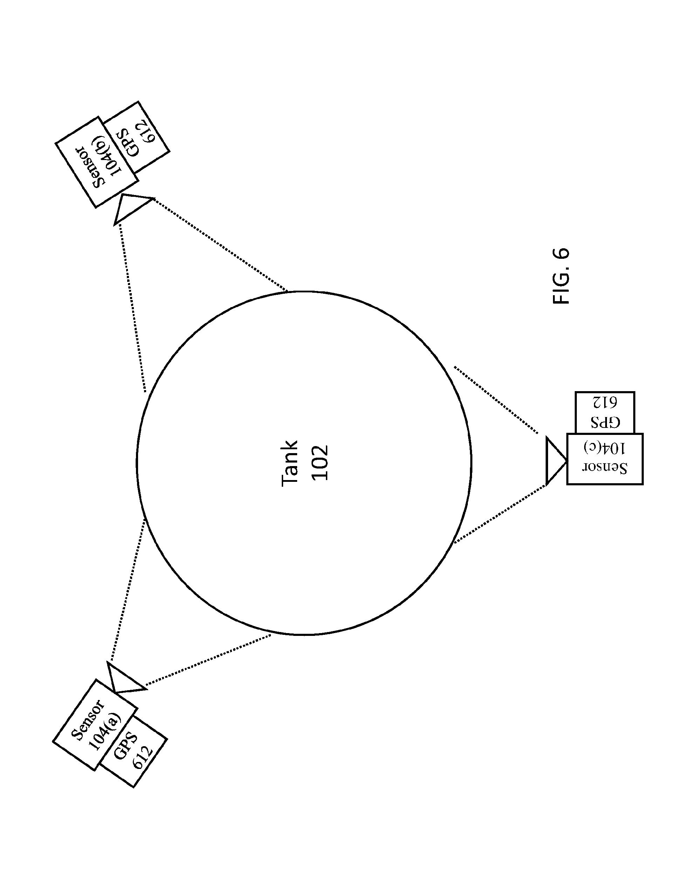

FIG. 6 provides a description of yet another alternative example IR camera configuration (viewed from above). In another disclosed configuration, multiple IR cameras 104(a), 104(b), and 104(c) are mounted strategically around the exterior of the liquid storage tank 102 so that non-uniform accumulation of sludge inside the tank 102 can be imaged. Each IR camera 104(a), 104(b), and 104(c) includes a global positioning system (GPS) 612, such as a differential GPS, to provide location information regarding the different locations for each of the IR camera 104(a), 104(b), and 104(c) around the storage tank 102. The images from the individual cameras 104(a), 104(b), and 104(c) can be preprocessed and certain low level features extracted. Subsequently, homography between the captured images can be estimated and the images registered to construct a 3-D panoramic view of the tank 102.

While this solution provides advantages for determining the topography of sludge in both uniform as well as non-uniform deposition scenarios, it faces several technological challenges. Some of the challenges include image registration from texture-less tank surfaces and data/inference fusion from IR cameras with potentially different temperature calibration.

Consequently, the accuracy of the solution above may be bolstered by taking input from other systems while estimating the sludge level within the tank 102. A predictive model, for example, which takes input from operational data (such as the type of storage, duration of storage, tank age, fluid properties, etc.), inspection data, maintenance data and prevailing ambient weather data (temperature, humidity etc.), may be used estimate a statistical prediction for the sludge level 120 within the tank 102. Conventional predictive model systems provide predictions with accuracies of a few feet (such as 4-5 feet). Below is a more detailed description of how a predictive model may improve the performance of the multi-sensor imaging systems described herein.

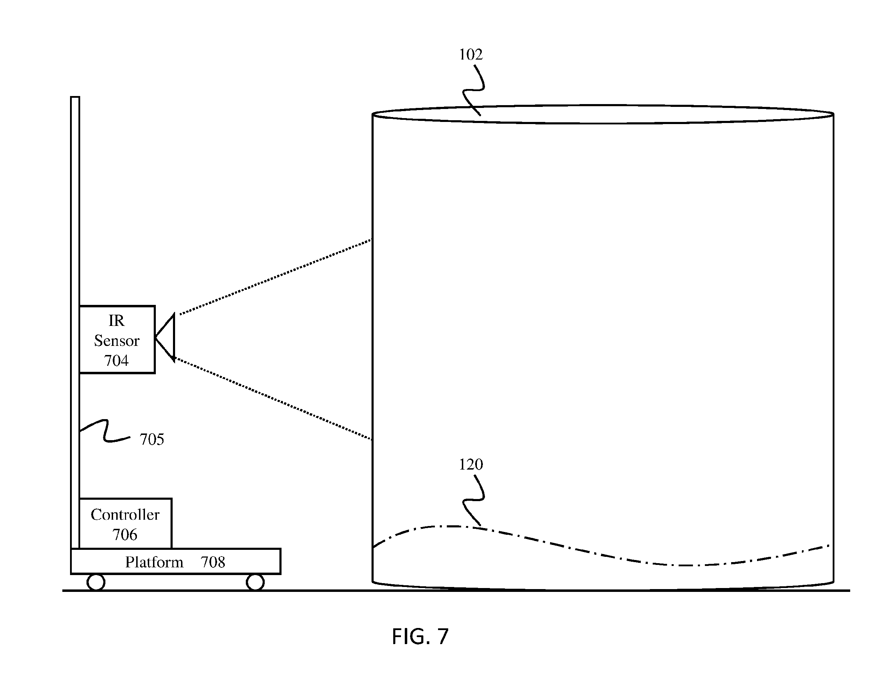

FIG. 7 provides a description of yet another alternative example IR camera configuration that comprises a forward-looking thermal IR infrared camera 704 with its vertical position off-ground adjusted using a vertical railing arrangement 705 mounted on a mobile platform 708. The platform 708 can be placed sufficiently close to the tank 102 so as to perform higher resolution imaging leading to centimeter or sub-centimeter accuracy in sludge level estimates. In addition, the mobility feature of the platform 708 provides flexibility to use it for monitoring any side of a tank and any storage tank in a tank farm including multiple tanks.

As described above, one disclosed embodiment predicts the approximate level of the sludge 120 using the predictive model. Using the railing controller 706, the camera position can be adjusted to point at those regions of the tank indicated by the predictive model as being the location of the sludge level, so as to cover those areas the camera's FOV. On the captured image, image pre-processing may be performed such as de-noising (such as to remove speckle noise) and image enhancement (such as to counter poor contrast). The preprocessed image can then be subjected to an image segmentation algorithm for estimating the sludge level. The image segmentation can exploit the gray level difference resulted in the captured image due to temperature differences between crude oil and sludge in the tank 102.

Using the following expression, the image-based measurement can be translated to an absolute value for sludge level:

$$H = H_c \left( 1 + \frac{\tan(\alpha_1 - \theta)}{\tan(\theta - \alpha_0)} \right)$$

Where $H_c$ is the height of the camera, $\alpha_0$ and $\alpha_1$ are the tilt angles of the top most and bottom most points relative to the camera's optical axis and computed using the following equation: $\alpha = \tan^{-1}\left(\dfrac{(v - v_0)}{F}\right)$, where v =

$v_{bot}$ or $v_{top}$, $(U_0, V_0)$ is image center

The IR camera configuration shown in FIG. 7 provides various advantages, including the generation of a 360° view of the tank 102 such that the non-uniform accumulation of sludge can be detected and a 3D topography-like surface can be generated. Another benefit of the IR camera configuration shown in FIG. 7 is the elimination of cumbersome camera calibration, since the IR camera 704 is forward-looking and the height of the camera can be determined by its vertical position on the vertical railing arrangement 705. Another benefit is that unlike other configurations described earlier, the IR camera configuration shown in FIG. 7 can operate using a non-iterative approach. Since the IR camera 704 is positioned to image the area of the tank 102 corresponding to the approximately predicted sludge/liquid level, multiple shots are not required and hence processing is simpler. Yet another benefit is that the estimated height of the sludge level 120 can be used as an input for future predictions for a predictive model.

A summary of the various characteristics of the different IR camera configuration choices for image-based tank farm monitoring is provided in Table 3 below.

Table 3. Relation between Obliqueness and Measurement Error

| S.No | Single / multi view | Fixed/PTZ Camera | Placement of IR camera from tank | Usage of Predictive Model | Forward FOV/ Oblique FOV | Pixel resolution | Image analysis |
|---|---|---|---|---|---|---|---|
| 1 | Single | Fixed | Far | No | Forward | Poor | Single step |
| 2 | Single | PTZ | Closer | No | Oblique and Forward | Moderate | Multi step |
| 3 | Single | Fixed | Closer | No | Forward | Good | Multi step |
| 4 | Single | Fixed | Closer | Yes | Forward | Good | Single step |
| 5 | Multi | Fixed | Closer | No | Forward | Good | Multi |

As explained above, IR camera configurations can provide a 360 degree panoramic view of the sludge profile 120. For a given tank 102, such as shown in FIG. 6, three IR cameras (104(a), (b) and (c)) may be placed such that they each cover 120 degrees of the FOV to collectively provide a complete 360 degree profile of the tank 102. By using the above setup, it is generally not possible to obtain the sludge profile at sub-centimeter level, because the tank height may be approximately 15 to 20m and width is approximately 80 to 110m. To image a large tank 102, cameras may be placed at a far distance, which can provide high resolution images for sludge profiling. Vertical mounts may be placed near the tank 102, wherein each mount includes a camera that covers 120 degrees of the FOV, so as to cover the 360 degrees of the tank. Each camera may move along the vertical mount and to a wholly different position on the ground, so as to cover the complete height of the tank. This setup facilitates taking images at different heights and also a complete 360 degrees view at each level. The captured images may then be used to generate a panoramic view of the tank 102, which provides a sludge waveform throughout the perimeter of the tank 102.

While various disclosed embodiments have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

The terminology used herein is for the purpose of describing particular embodiments only and is not intended to be limiting. As used herein, the singular forms "a," "an," and "the" are intended to include the plural forms as well, unless the context clearly indicates otherwise. Furthermore, to the extent that the terms "including," "includes," "having," "has," "with," or variants thereof are used in either the detailed description and/or the claims, such terms are intended to be inclusive in a manner similar to the term "comprising."

As will be appreciated by one skilled in the art, the subject matter disclosed herein may be embodied as a system, method or computer program product. Accordingly, this Disclosure can take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, this Disclosure may take the form of a computer program product embodied in any tangible medium of expression having computer usable program code embodied in the medium.

Any combination of one or more computer usable or computer readable medium(s) may be utilized. The computer-usable or computer-readable medium may be, for example, but not limited to, an electronic, magnetic, optical, electromagnetic, infrared, or semiconductor system, apparatus, or device. More specific examples (a non-exhaustive list) of the computer-readable medium would include non-transitory media including the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CDROM), an optical storage device, or a magnetic storage device.

Computer program code for carrying out operations of the disclosure may be written in any combination of one or more programming languages, including an object*-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The Disclosure is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a physical computer-readable storage medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

**Claims**

1. A multi-sensor method of inspecting a storage tank (102) that holds a liquid, comprising:

   generating an infrared image of an exterior of the storage tank;
   generating an ultrasonic image of the exterior of the storage tank;
   generating at least one of an ultrasonic image of an interior of the storage tank and a radar image of the interior of the storage tank; and
   fusing the infrared image, the ultrasonic image of the exterior of the storage tank and at least one of the radar image and the ultrasonic image of the interior of the storage tank to generate a sludge level (120) image profile for sludge in the storage tank, and a liquid level image for liquid in the storage tank.

2. The method of claim 1, wherein the step of generating an infrared image of an exterior of the storage tank (102) further comprises:

   receiving a plurality of infrared images from one or more infrared cameras (104a, 104b, 104c) located at different positions around the storage tank; and
   generating a three-dimensional infrared image of the storage tank based on the infrared images received from the one or more infrared cameras.

3. The method of claim 2, wherein the step of generating an infrared image of an exterior of the storage tank (102) further comprises:

moving the one or more infrared cameras (104a, 104b, 104c) in a vertical direction on a movable vertical mount (106) and generating a plurality of infrared images at different heights; and
generating a three-dimensional infrared image of the storage tank based on the infrared images received from the one or more infrared cameras.

4. The method of claim 1, wherein the step of generating an infrared image of an exterior of the storage tank (102) comprises:

receiving a plurality of infrared images from one or more infrared cameras (104a, 104b, 104c) positioned around a circumference of the storage tank; and
generating a three-dimensional infrared image of the storage tank based on the infrared images received from the one or more infrared cameras.

5. The method of claim 4, wherein the step of generating an infrared image of an exterior of the storage tank (102) further comprises:

moving the one or more infrared cameras (104a, 104b, 104c) in a vertical direction on a movable vertical mount and generating a plurality of infrared images at different heights; and
generating a three-dimensional infrared image of the storage tank based on the infrared images received from the one or more infrared cameras.

6. A multi-sensor imaging system (100) for inspecting a storage tank (102) that holds a liquid, comprising:

an infrared sensor (104) including a scanning vertical mount (106) positioned outside said storage tank;
an ultrasonic sensor array (110) positioned outside said storage tank;
at least one of an ultrasonic sensor (108) positioned inside said storage tank and a phased array radar (112) positioned inside the storage tank and secured to an interior top surface of said storage tank; and
a processor (114) coupled to receive multi-sensor data from the infrared sensor, the ultrasonic sensor array, and at least one the phased array radar and the ultrasonic sensor positioned inside the storage tank, the processor fusing the multi-sensor data to generate a sludge level (120) for sludge in the storage tank, and a liquid level for liquid in the storage tank.

7. The system of claim 6, wherein the infrared sensor (104) comprises at least three infrared cameras (104a, 104b, 104c) positioned around a circumference of the storage tank (102).

8. The system of claim 6, wherein the processor (114) is further coupled to the phased array radar (112) so as to steer a beam of the phased array radar based on an ultrasonic image generated by the ultrasonic sensor array (110).

9. The system of claim 8, wherein the processor (114) implements a computer program that executes a predictive model for calculating a position of the sludge within the storage tank (102).

10. The system of claim 6, wherein the infrared sensor 104 further comprises a global positioning system (GPS) (612) for generating location information, and wherein the processor (114) is further coupled to receive said location information from the GPS system for calculating a position of the infrared sensor (104).

FIG. 1A

FIG. 1B

FIG. 2

FIG. 3

EP 2 520 909 A1

FIG. 4

FIG. 5

Sensor
104(b)

GPS
612

Sensor
104(c)

GPS
612

Tank
102

Sensor
104(a)

GPS
612

FIG. 6

EP 2 520 909 A1

FIG. 7

Europäisches
Patentamt

European
Patent Office

Office européen
des brevets

# EUROPEAN SEARCH REPORT

**Application Number**

EP 12 16 4667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 175 420 A1 (HONEYWELL INT INC [US]) 14 April 2010 (2010-04-14) * the whole document * | 1-10 | INV. G01F23/292 G01F23/296 |
| Y | US 2006/213273 A1 (LASSER ROBERT S [US] ET AL) 28 September 2006 (2006-09-28) * abstract; figures 4a, 4b * * paragraph [0001] - paragraph [0008] * | 1-10 | |
| A | EP 2 166 348 A1 (NAT INST OF ADVANCED IND SCIEN [JP]) 24 March 2010 (2010-03-24) * abstract * | 1-10 | |
| A | DE 43 39 441 A1 (INCATRONIC PHOENIX MESTECHNIK [DE]) 24 May 1995 (1995-05-24) * abstract; figures 1-3 * * column 3, line 15 - column 5, line 38 * | 1-10 | |
| A | US 2009/217753 A1 (BURRIS STEVE Y [US]) 3 September 2009 (2009-09-03) * abstract; figures 2a, 3a * | 1-10 | TECHNICAL FIELDS SEARCHED (IPC) |
| A | JP 1 239442 A (NIPPON KOKAN KK) 25 September 1989 (1989-09-25) * abstract * | 1 | G01F |

The present search report has been drawn up for all claims

| Place of search | Date of completion of the search | Examiner |
|---|---|---|
| Munich | 27 July 2012 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 12 16 4667

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2012

| Patent document cited in search report | | Publication date | Patent family member(s) | | Publication date |
|---|---|---|---|---|---|
| EP 2175420 | A1 | 14-04-2010 | EP<br>US | 2175420 A1<br>2010086172 A1 | 14-04-2010<br>08-04-2010 |
| US 2006213273 | A1 | 28-09-2006 | NONE | | |
| EP 2166348 | A1 | 24-03-2010 | CA<br>CN<br>EP<br>KR<br>US<br>WO | 2679149 A1<br>101641594 A<br>2166348 A1<br>20100041696 A<br>2010107765 A1<br>2009008515 A1 | 15-01-2009<br>03-02-2010<br>24-03-2010<br>22-04-2010<br>06-05-2010<br>15-01-2009 |
| DE 4339441 | A1 | 24-05-1995 | NONE | | |
| US 2009217753 | A1 | 03-09-2009 | NONE | | |
| JP 1239442 | A | 25-09-1989 | NONE | | |

EPO FORM P0459

For more details about this annex : see Official Journal of the European Patent Office, No. 12/82